# EUROPEAN PATENT SPECIFICATION

(11) **EP 4 434 834 B1**
(45) Date of publication and mention of the grant of the patent: **29.04.2026**
(21) Application number: 23163253.0
(22) Date of filing: 21.03.2023
(51) Int. Cl.: B60T 17/22, B60T 13/66, B60T 13/74, B61H 5/00, F16D 55/224

(54) **BRAKE CONTROLLER FOR A RAIL VEHICLE**
BREMSSTEUERGERÄT FÜR EIN SCHIENENFAHRZEUG
DISPOSITIF DE COMMANDE DE FREIN POUR UN VÉHICULE FERROVIAIRE

(43) Date of publication of application: 25.09.2024
(73) Proprietor: Dellner Bubenzer AB, 781 70 Borlänge (SE)
(72) Inventor: GUSTAVSSON, Claes-Göran, 723 53 VÄSTERÅS (SE)
(74) Representative: Brann AB

(56) References cited:
- EP-B1- 1 266 814
- EP-B1- 3 371 012
- CA-A1- 2 893 607
- DE-A1- 102018 206 842

## Description

### TECHNICAL FIELD

The present invention relates generally to ensuring the functional integrity of the deceleration system in a rail vehicle. Especially, the invention relates to a brake controller according to the preamble of claim 1.

### BACKGROUND

The braking system of a rail vehicle is employed to decelerate the rail vehicle, and usually also to implement a parking brake function. Typically, the same brakes are used both for service braking and emergency braking. Naturally, for all brake functions, it is of utmost importance that the braking system does not malfunction, or fail.

Today's rail vehicles are often regulated using compressed air, known as pneumatically regulated brakes. One disadvantage of such pneumatic brakes is that they cannot be regulated quickly. More important, an air leakage in a pneumatic braking system risks resulting in a severely reduced braking capacity. Therefore, inter alia for safety reasons, various kinds of electrically controlled braking systems begin to emerge on the market.

US 2020/0198605 shows a microcomputer-controlled electromechanical braking system that comprises an electromechanical braking control device and an electromechanical braking unit. The electromechanical braking control device comprises a braking microcomputer control unit, an electromechanical control unit and a standby power supply module. The braking microcomputer control unit receives a braking instruction signal sent by a driver or an automatic driving system, performs the calculation of a target braking force and braking management, and at the same time, can communicate with braking microcomputer control units of other vehicles in a train group.

CN 114200872 discloses a servo motor band-type brake system. having a servo driver with a built-in band-type brake control system. The band-type brake control system comprises: a band-type brake circuit, a micro-control unit (MCU) and a field- programmable gate array (FPGA). The servo driver is connected with the servo band-type brake motor and a man-machine interface used for acquiring and displaying a real-time current signal. The FPGA obtains a real-time current signal of the band-type brake circuit and sends the real-time current signal to the MCU. The MCU receives the real-time current signal sent by the FPGA and sends the real-time current signal to the man-machine interface. The MCU sends a control signal to the band-type brake circuit, and the band-type brake circuit controls the servo band-type brake motor to brake and release according to the control signal. Thus, the actual operation condition of the band-type brake circuit can be visually obtained, and any problems of the band-type brake circuit can be timely and accurately found. The fault rate of the band-type brake circuit is effectively reduced, and the reliability and safety of the band-type brake circuit are improved.

CN201298159 Y describes a digital-signal processor (DSP)-based train electro-pneumatic brake controller, which takes a DSP and an FPGA as the core and adopts an MCU to realize multifunctional real-time communication in a train electro-pneumatic brake controller. The train electropneumatic brake comprises an FPGA chip, a DSP chip and an MCU chip, wherein the FPGA chip is connected with a man-machine interface by 8-bit FPGA buses, connected with a multiple selector, a locker and a D/A converter by 16-bit FPGA buses, connected with the DSP chip and a Static Random Access Memory (SRAM) by 16-bit DSP buses and respectively connected with an analog signal conditioning circuit and a power driving circuit by photoelectric isolation modules. The DSP chip is connected with an A/D converter by a serial peripheral interface (SPI) bus and connected with the MCU chip by an serial communications interface (SCI) communication line. The multiple selector and the locker respectively are connected with a digital signal conditioning circuit by photoelectric isolation modules, and the D/A converter and the A/D converter respectively are connected with the analog signal conditioning circuit by photoelectric isolation modules. The train electropneumatic brake controller adopts the FPGA chip to buffer the data of the buses in different speed degrees so as to satisfy the access sequences of the buses in different speed degrees, has high instantaneity of system control, realizes a plurality of communication modes and improves the instantaneity of communication and the expansibility of the system communication.

EP 1 266 814 shows extra brake control devices that are interconnected to central and local brake control devices, BCDs, in a group and are allocated to a group of the local BCDs for part of a rail vehicle or for part of a group of rail vehicles like a bogie or a single wagon or carriage. Each local BCD for the group of local BCDs communicates with the extra BCDs via a separate local braking system data bus.

CA 2 893 607 describes a wheel axle of a rail vehicle that is provided with an electro-dynamic brake system and with a not fully rated mechanical braking system. A braking method for braking the wheel comprises at least a service braking mode carried out solely with the electro-dynamic braking system, a parking brake mode carried out solely by the mechanical braking system, and an emergency braking mode comprising a first level emergency braking mode carried out solely by the electro-dynamic braking system and a second level emergency braking mode activated when the first level emergency braking mode has a malfunction and carried out solely by the electro-dynamic braking system as long as a low efficiency condition of the electro-dynamic braking system is not met and at least partly by the mechanical braking system when the low efficiency condition of the electro-dynamic braking system is met.

DE 10 2018 206842 discloses a control system of a brake system of a rail vehicle, in which control system control units for electromechanical actuators of brake units are provided and are configured in such a way that each one is equipped with its own arithmetic unit and all of them can communicate with one another in order to individually or jointly solve one or more brake-related tasks.

EP 3 371 012 relates to a vehicle having a brake device which comprises at least a friction brake unit, an electrical brake unit and a brake control device. In order to provide a vehicle having a reliable and structurally simple brake device, it is proposed that the friction brake unit has at least brake components made of a composite material and that the brake control device comprises a monitoring device which is provided for monitoring a brake operation performed by the electrical brake unit.

Thus, electrically controlled brake systems exist in which various measures are applied to improve the functional reliability. However, there is yet no example of a control system for an electrically controlled rail vehicle brake, where the control system, as such, meets the requirements of international functional safety standards.

### SUMMARY

The object of the present invention is therefore to offer a solution that solves the above problem and enables braking of rail vehicles at a functional integrity with a risk factor and probability of failure on demand being lower than what is prescribed by today's international functional safety standards relating to the rail industry, such as IEC 61508 and EN 50128.

According to one aspect of the invention, the object is achieved by a brake controller for a rail vehicle, which brake controller is configured to receive a brake command and in response thereto produce a master control signal adapted to control an electrically operated brake unit to perform a braking operation. The brake controller contains first and second control units and a gatekeeper unit. The first control unit includes a processing circuitry arranged to process the brake command to produce a first control signal as a result of running a computer program on the processing circuitry.

The second control unit includes a state machine arranged to take the brake command as an input state and produce a second control signal as an output state resulting from said input state being fed into the state machine. The gatekeeper unit is configured to receive the first and second control signals, and in response thereto produce the master control signal if and only if the first and second control signals fulfil an identity criterion. I.e. otherwise, no master control signal is produced.

The above brake controller is advantageous because it ensures that the control signal, which causes the brake to mechanically effect the braking function exclusively reaches the brake unit if this signal is uncorrupted. Namely, the first and second control units are implemented in technologies being functionally diverse from one another and the respective instruction sets according to which the control units operate are fully uncorrelated. Therefore, the risk that the first and second control signals are erroneous in the same way simultaneously is less than 10⁻¹² per hour. This measure meets the highest levels of all existing international safety standards with a margin of several powers of ten.

The state machine may be implemented by an integrated circuit. For example, the integrated circuit may be an FPGA. Preferably, the FPGA, in turn, is designed using a programming language that is different from and logically unrelated to a programming language used to generate the computer program running on the processing circuitry. This ensures a perfect independence between the functionalities of the first and second control units.

According to one embodiment of this aspect of the invention, the gatekeeper unit includes parallel branches of switches. Here, a first switch branch contains a first switch controllable to be open or closed in response to the first control signal and a second switch controllable to be open or closed in response to the second control signal. Similarly, a second switch branch contains a third switch controllable to be open or closed in response to the first control signal and a fourth switch controllable to be open or closed in response to the second control signal. Each of the first and second switch branches is configured to pass through the master control signal if and only if the first and second control signals fulfil the identity criterion, in which case all of the first, second, third and fourth switches are closed. The proposed parallel switch configuration of the gatekeeper unit is advantageous because it provides redundancy to tolerate single switch faults and enables one of the switch branches to be tested while the other one remains in operation.

The first, second, third and fourth switches may be implemented in metal-oxide-semiconductor field-effect transistor (MOSFET) technology, which is a design known to be unfailing and capable of handling high current levels at low losses.

According to another embodiment of this aspect of the invention, each of the first and second control signals may attain discrete values only, which discrete values range from a minimum value to a maximum value. Here, the gatekeeper unit is configured to consider the identity criterion as fulfilled exclusively if the first and second control signals attain the same discrete value. Further, if the identity criterion is fulfilled, the gatekeeper unit is configured to produce the master control signal at a value being identical to said same discrete value. Thereby, a highly reliable master control signal may be fed to the brake unit in a straightforward manner.

For example, the master control signal, in turn, may be configured to control an electric motor such that the electric motor mechanically influences at least one friction member, e.g. mounted on a respective caliper, to move relative to a rotating member, e.g. a brake disc, of the electrically operated brake unit.

Additionally, each of the first and second control units is configured to receive a feedback signal from the electrically operated brake unit, which feedback signal is produced by a force sensor therein. Consequently, the first and second control units may independently evaluate whether or not the master control signal resulted in the desired braking action.

According to another embodiment of this aspect of the invention, each of the first and second control units is configured to produce a respective first and second acknowledgement message in response to the feedback signal. The first and second acknowledgement messages confirm that the braking operation has been effected. The first and second control units are further configured to exchange the first and second acknowledgement messages with one another, and exclusively in one of the first and second control units, produce a master acknowledgement message, if and only if the first and second acknowledgement messages agree on a magnitude of a force at which the braking operation was effected. The magnitude may be indicated in first and second data fields of each of the first and second acknowledgement messages respectively. Hence, a validated feedback message may be sent confirming that the braking action was effected correctly.

Preferably, the first and second acknowledgement messages are considered to agree on the magnitude of the force if a checksum calculated in one of the first and second control units, say the first, based on the first data field in one of the first and second acknowledgement messages, say the first, matches the second data field in the other one of the first and second acknowledgement messages, which said other one message was produced in the other one of the first and second control units. Thus a highly reliable and independent validation may be accomplished in a relatively uncomplicated manner.

According to still another embodiment of this aspect of the invention, the brake controller also contains a first motor diagnostic unit that is configured to receive at least one root diagnostic signal from the electric motor. The at least one root diagnostic signal indicates one or more electromagnetic characteristics of the electric motor, e.g. a power consumption, a current circulated through the electric motor, a terminal voltage and/or a magnetic quantity of the electric motor. In response to the at least one root diagnostic signal, the first motor diagnostic unit is configured to produce a first motor diagnostic signal. Moreover, the brake controller contains a second motor diagnostic unit that is configured to receive the at least one root diagnostic signal from the electric motor, and in response thereto produce a second motor diagnostic signal. The first control unit is further configured to: receive the first motor diagnostic signal; produce a first motor-diagnostic acknowledgement message in response thereto, which first motor-diagnostic acknowledgement message reflects the one or more electromagnetic characteristics of the electric motor; forward the first motor-diagnostic acknowledgement message to the second control unit; and receive a second motor-diagnostic acknowledgement message from the second control unit. Analogously, the second control unit is configured to: receive the second motor diagnostic signal; produce the second motor-diagnostic acknowledgement message in response thereto, which second motor-diagnostic acknowledgement message reflects the one or more electromagnetic characteristics of the electric motor; and forward the second motor diagnostic acknowledgement message to the first control unit. The brake controller is configured to produce a master motor-diagnostic acknowledgement message exclusively in one of the first and second control units, and the master motor-diagnostic acknowledgement message is produced if and only if the first and second motor diagnostic acknowledgement messages agree on the one or more electromagnetic characteristics of the electric motor reflected by the first and second motor diagnostic acknowledgement messages respectively. Consequently, a validated feedback message may be generated, which reflects an operational status of the electric motor.

According to one embodiment of this aspect of the invention, the brake controller also contains first and second force-sensor diagnostic units. The first force-sensor diagnostic unit is configured to receive a source diagnostic signal from the force sensor. The source diagnostic signal indicates a functionality characteristic of the force sensor. In response to the source diagnostic signal, the first force-sensor diagnostic unit is configured to produce a first force-sensor diagnostic signal, for example including a checksum generated based on a signal value of the first force-sensor diagnostic signal. Similarly, the second motor diagnostic unit is configured to receive the source diagnostic signal from the electric motor; and in response thereto, produce a second force-sensor diagnostic signal. The first control unit is configured to: receive the first force-sensor diagnostic signal; produce a first force-sensor diagnostic acknowledgement message in response thereto, which first force-sensor diagnostic acknowledgement message reflects the functionality characteristic of the force sensor; forward the first force-sensor diagnostic acknowledgement message to the second control unit; and receive a second force-sensor diagnostic acknowledgement message from the second control unit. The second control unit is configured to: receive the second force-sensor diagnostic signal; produce the second force-sensor diagnostic acknowledgement message in response thereto, which second force-sensor diagnostic acknowledgement message reflects the functionality characteristics of the force sensor; and forward the second force-sensor diagnostic acknowledgement message to the first control unit. Here, the brake controller is configured to produce a master force-sensor diagnostic acknowledgement message exclusively in one of the first and second control units. The master force-sensor diagnostic acknowledgement message is produced if and only if the first and second force-sensor diagnostic acknowledgement messages agree on the functionality characteristics of the force sensor reflected by the first and second force-sensor diagnostic acknowledgement messages respectively. Hence, a validated feedback message may be generated, which reflects a diagnostics of the force sensor.

For instance, the source diagnostic signal may contain a first data field indicating a temperature of at least one component in the electrically operated brake unit and/or a second data field indicating at least one acceleration parameter reflecting a movement of the electrically operated brake unit in at least one dimension. Such parameters are beneficial because they enable conclusions to be made regarding the general health status of the electrically operated brake unit.

According to an additional embodiment of this aspect of the invention, the first control unit is further configured to produce at least one first status signal reflecting at least one operation parameter indicating at least one functional status of at least one internal component of the first control unit and/or at least one environment parameter indicating at least one milieu aspect concerning the first control unit. Analogously, the second control unit is further configured to produce at least one second status signal reflecting at least one operation parameter indicating at least one functional status of at least one internal component of the second control unit and/or at least one environment parameter indicating at least one milieu aspect concerning the second control unit. Here, the brake controller includes a common diagnostic unit configured to: receive the first and second status signals, and produce an alarm message if at least one of the first and second status signals indicates at least one malfunctioning internal component and/or at least one milieu aspect being outside an acceptable range. Thereby, the brake controller, as such, may be adequately monitored.

According to still another embodiment of this aspect of the invention, the brake controller contains first and second voltage modules. The first voltage module is arranged to receive a supply voltage, and in response thereto, provide at least one first output voltage to the first control unit. The second voltage module is arranged to receive the supply voltage and in response thereto, provide at least one second output voltage to the second control unit.

For example, each of the first and second voltage modules may include respective over and under voltage detectors. Each of said over voltage detectors is configured to monitor the supply voltage, and if the supply voltage exceeds a first threshold level, generate an over voltage alarm. Each of said under voltage detectors is configured to monitor the supply voltage, and if the supply voltage falls below a second threshold level, generate an under voltage alarm. Thus, any unacceptable deviations in the supply voltage may be detected and reported to a relevant supervision function.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a block diagram illustrating a brake controller and an electrically operated brake unit according to a first embodiment of the invention;
- Figure 2: shows a schematic illustration of a gatekeeper unit according to one embodiment of the invention;
- Figure 3: illustrates a principle of how an output signal from a force sensor may be handled according to one embodiment of the invention; and
- Figure 4: shows a block diagram illustrating a brake controller according to further embodiments of the invention.

### DETAILED DESCRIPTION

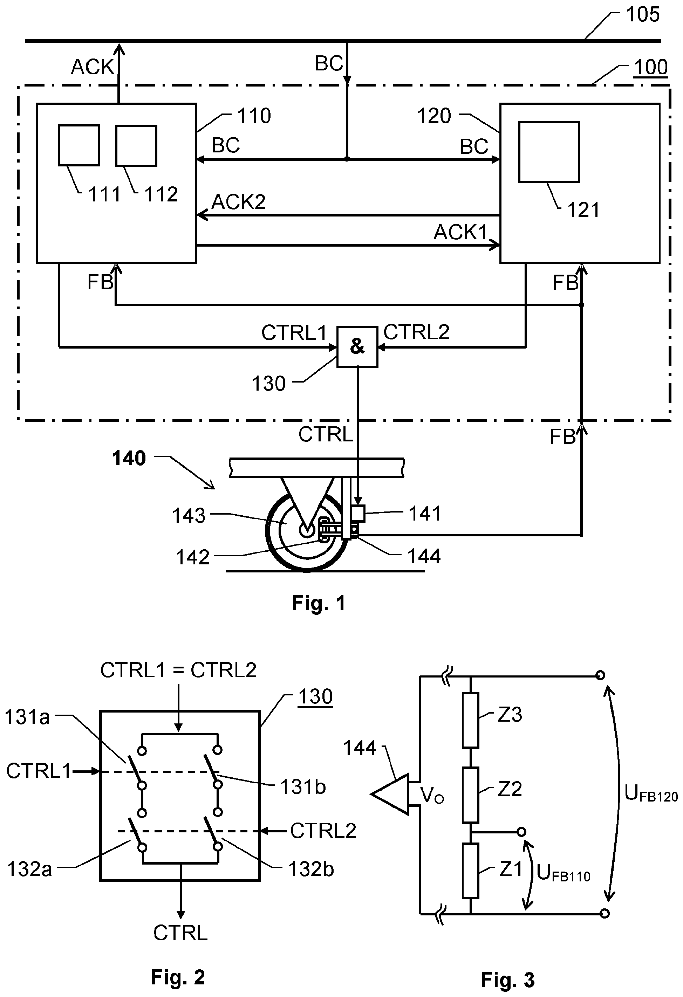

In Figure 1, we see a block diagram illustrating a brake controller 100 arranged to control an electrically operated brake unit 140 in a rail vehicle according to one embodiment of the invention.

The brake controller 100 is configured to receive a brake command BC, which for example is generated by a train driver and forwarded to the brake controller 100 via a data bus105 in the rail vehicle. In response to the brake command BC, the brake controller 100 is configured to produce a master control signal CTRL, which, in turn, is adapted to control the electrically operated brake unit 140 to perform a braking operation, for example applying a particular brake force. However, according to the invention, the braking operation may also involve releasing or reducing an already applied brake force.

The brake controller 100 contains first and second control units 110 and 120 respectively and a gatekeeper unit 130. According to the invention, the first and second control units 110 and 120 are implemented in technologies being functionally diverse from one another and the respective instruction sets according to which the control units operate are fully uncorrelated.

Specifically, the first control unit 110 includes a processing circuitry 111 that is arranged to process the brake command BC to produce a first control signal CTRL1 as a result of running a computer program on the processing circuitry 111. The computer program is preferably stored in a memory unit 112 communicatively connected to the processing circuitry 111, which memory unit 112 may be included in the first control unit 110.

The second control unit 120 includes a state machine 121, which is arranged to take the brake command BC as an input state and produce a second control signal CTRL2 as an output state resulting from the input state being fed into the state machine 121.

The state machine may be implemented by an integrated circuit, which for example is an FPGA. Preferably, the FPGA, in turn, is designed using a programming language that is different from and logically unrelated to a programming language used to generate the computer program running on the processing circuitry 111. This ensures perfect independence between the first and second control units.

The first and second control units 110 and 120 are designed to implement identical functionality. This means that if a particular brake command BC is fed into the first and second control units 110 and 120, these units shall produce the exact same output control signals. In other words, unless an error or malfunction occurs, the first control signal CTRL1 shall always be identical to the second control signal CTRL2.

The gatekeeper unit 130 is configured to receive the first and second control signals CTRL1 and CTRL2 respectively. In response to these signals, the gatekeeper unit 130 is configured to produce the master control signal CTRL. However, the master control signal CTRL is only produced if the first and second control signals CTRL1 and CTRL2 fulfil an identity criterion.

Referring now to Figure 2 showing a schematic illustration of the gatekeeper unit 130 according to one embodiment of the invention.

Here, the gatekeeper unit 130 contains two parallel branches of switches, where a first branch of switches includes first and second switches 131a and 132a respectively, and a second branch of switches includes third and fourth switches 131b and 132b respectively. The first switch 131a is controllable to be open or closed in response to the first control signal CTRL1 and the second switch 132a is controllable to be open or closed in response to the second control signal CTRL2. The third switch 131b is controllable to be open or closed in response to the first control signal CTRL1 and the fourth switch 132b is controllable to be open or closed in response to the second control signal CTRL2.

As illustrated in Figure 2, each of the first and second branches of switches is configured to pass through the master control signal CTRL if and only if the first and second switches 131a and 132a and the third and fourth switches 131b and 132b respectively are closed. The first and third switches 131a and 131b are controlled in response to the first control signal CTRL1, and the second and fourth switches 132a and 132b are controlled in response to the second control signal CTRL2. In particular, the first, second, third and fourth switches 131a, 131b, 132a and 132b are controlled to be closed if and only if the first and second control signals CTRL1 and CTRL2 fulfil the identity criterion. In such a case, said switches pass through the master control signal CTRL being identical to each of the first and second control signals CTRL1 and CTRL2.

The schematic configuration of the gatekeeper unit 130 illustrated in Figure 2 is advantageous because the parallel branches of switches provide a redundancy that allows the gatekeeper unit 130 to function also if any single one of the first, second, third or fourth switches 131a, 131b, 132a or 132b fails. Moreover, the parallel design enables the switches in one of the branches to be tested while the switches in the other branch remain operational.

For example the first, second, third and fourth switches 131a, 132a, 131b and 132b may be implemented in MOSFET technology. This is beneficial because MOSFET switches are comparatively fail-safe, and are capable of handling relatively high currents. MOSFET switches are also advantageous because they have a relatively small R_{DS}(on) value, i.e. low resistance when being switched on, which equals low losses and negligible impact on the signals being forwarded.

For further improved reliability, it is preferable if the first, second, third and fourth switches 131a, 132a, 131b and 132b are implemented in at least two separate components, e.g. with one component per branch of switches in the gatekeeper unit 130.

According to one embodiment of the invention, each of the first and second control signals CTRL1 and CTRL2 may exclusively attain discrete values, which range from a minimum value to a maximum value. The gatekeeper unit 130 is here configured to consider the identity criterion as fulfilled if and only if the first and second control signals CTRL1 and CTRL2 attain the same discrete value. If the identity criterion is fulfilled, the gatekeeper unit 130 is configured to produce the master control signal CTRL at a value being identical to said same discrete value. In other words, the **master control** signal is produced such that CTRL = CTRL1 = CTRL2.

For instance, the first and second control signals CTRL1 and CTRL2 as well as the master control signal CTRL may be embodied as respective direct currents in response to whose magnitude an electric motor 141, e.g. a stepper motor or a brushless DC motor, mechanically influences at least one friction member 142, e.g. brake pads mounted on calipers, to move relative to a rotating member 143, e.g. a brake disc, of the electrically operated brake unit 140. Should for example the electric motor 141 be a stepper motor, the direct current represented by the master control signal CTRL may designate a number of angular steps that an axis of the stepper motor shall take to mechanically influence at least one friction member 142, preferably via a gear-shaft mechanism.

According to one embodiment of the invention, each of the first and second control units 110 and 120 is configured to receive a feedback signal FB from the electrically operated brake unit 140. The feedback signal FB is produced by a force sensor 144 of the electrically operated brake unit 140. The force sensor 144, which is symbolically illustrated in Figure 3 may for example be of load-cell type or strain-gauge type. Typically, the force sensor 144 generates an output signal in the form of a voltage V_{O} indicative of a force exerted on a sensing probe. Naturally, the force sensor 144 is configured to register both positive and negative variations in force, i.e. increases as well as decreases. Thus, the voltage V_{O} may be elevated or lowered as function of time depending on the brake commands BC being effected.

Figure 3 exemplifies how the voltage V_{O} from the force sensor 144 representing the feedback signal FB may be received by the first and second control units 110 and 120. Here, the first control unit 110 receives a first fraction of the voltage V_{O}, which first fraction is registered as a voltage U_{FB110} over a first resistive element Z1 of an impedance ladder. The second control unit 120 receives the full voltage V_{O} as a voltage U_{FB210} over the first resistive element Z1 plus two additional resistive elements Z2 and Z3 of the impedance ladder. The relationship between the resistance value of the first resistive element Z1 and the total resistance value of the two additional resistive elements Z2 and Z3 is known to the first control unit 110. Consequently, the first control unit 110 may unambiguously derive the voltage V_{O} from the voltage U_{FB110}.

Analogous to the above, the first and second control units 110 and 120 exchange their respective measurements of the voltage V_{O} with one another; and should the voltage value derived in the first control unit 110 differ from the voltage U_{FB120} registered by the second control unit 120, this indicates that at least one of the resistive elements Z1, Z2 and Z3 in the impedance ladder is faulty.

According to one embodiment of the invention, each of the first and second control units 110 and 120 respectively is further configured to produce a respective first and second acknowledgement message ACK1 and ACK2 in response to the feedback signal FB. The first and second acknowledgement messages ACK1 and ACK2 confirm that the braking operation has been effected, for example by returning a respective force value. The first and second control units 110 and 120 are further configured to exchange the first and second acknowledgement messages ACK1 and ACK2 with one another to verify whether they agree, e.g. indicate the same force value. If and only if the first and second acknowledgement messages ACK1 and ACK2 agree on a magnitude of a force at which the braking operation was effected, exclusively one of the first and second control units 110 and 120, say the first control unit 110, is configured to produce a master acknowledgement message ACK, which indicates a force magnitude equal to what is indicated by each of the first and second acknowledgement messages ACK1 and ACK2, for example in first and second data fields respectively thereof.

According to one embodiment of the invention, the first and second acknowledgement messages ACK1 and ACK2 are considered to agree on the force magnitude if a checksum calculated in one of the first and second control units, say 110, based on the first data field in one of the first and second acknowledgement messages ACK1 matches the second data field in the other one of the first and second acknowledgement messages ACK2, which was produced in the other one of the first and second control units, say 120.

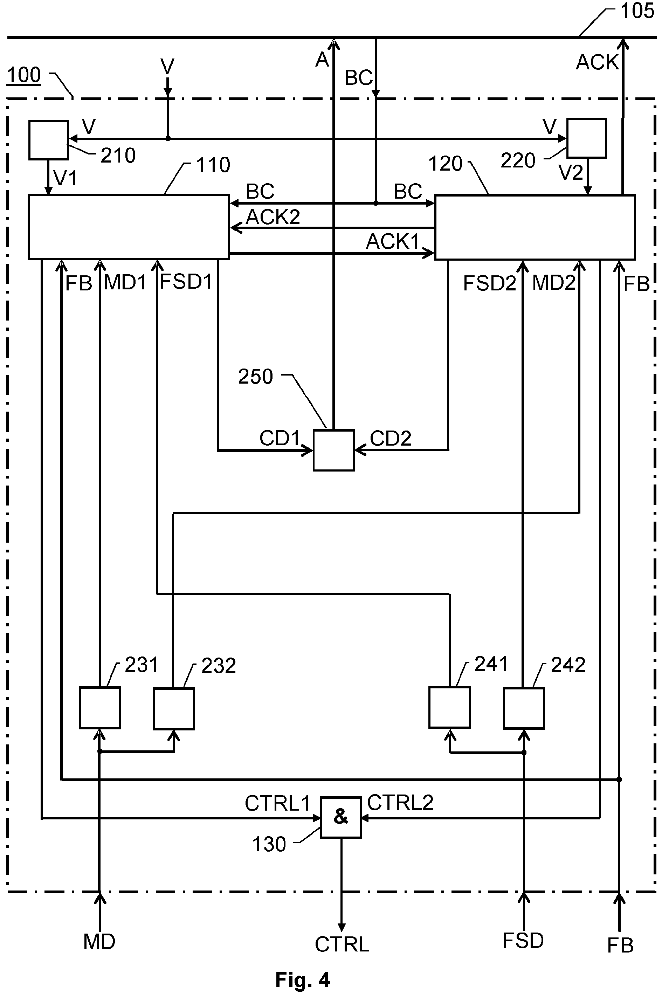

Figure 4 shows a block diagram illustrating the brake controller 100 according to further embodiments of the invention. In Figure 4, all entities, commands, signals and messages that also occur in Figures 1 to 3 designate the same entities, commands, signals and messages as described above referring to Figures 1 to 3.

In one embodiment of the invention illustrated in Figure 4, the brake controller 100 contains first and second motor diagnostic units 231 and 232 respectively. The first motor diagnostic unit 231 is configured to receive at least one root diagnostic signal MD from the electric motor 141. The at least one root diagnostic signal MD indicates one or more electromagnetic characteristics of the electric motor 141, such as a power consumed by the electric motor 141, a current circulated through the electric motor 141, a terminal voltage at the electric motor 141 and/or a magnetic quantity of the electric motor 141, e.g. a magnetic field component registered by a Hall sensor or similar sensor. In response to the at least one root diagnostic signal MD, the first control unit 110 is configured to produce a first motor diagnostic signal MD1 that either summarizes the information carried by the at least one root diagnostic signal MD, or indicates - binary - whether or not the at least one root diagnostic signal MD lie within acceptable ranges.

The second motor diagnostic unit 232 is also configured to receive the at least one root diagnostic signal MD from the electric motor 141, and in response thereto, produce a second motor diagnostic signal MD2 whose format is identical to the format of the first motor diagnostic signal MD2.

Here, the first control unit 110 is configured to receive the first motor diagnostic signal MD1, and in response thereto, produce a first motor-diagnostic acknowledgement message, symbolized as ACK1 in Figure 4. The first motor-diagnostic acknowledgement message reflects the one or more electromagnetic characteristics of the electric motor 141, for instance in the form of a summary or as a binary parameter analogous to the above. The first control unit 110 is also configured to forward the first motor-diagnostic acknowledgement message to the second control unit 120, and receive a second motor-diagnostic acknowledgement message from the second control unit 120.

Similarly, the second control unit 120 is configured to receive the second motor diagnostic signal MD2, and in response thereto produce the second motor-diagnostic acknowledgement message, symbolized as ACK2 in Figure 4. The second motor-diagnostic acknowledgement message reflects the one or more electromagnetic characteristics of the electric motor 141 on the same format as the first motor-diagnostic acknowledgement message. Additionally, the second control unit 120 is also configured to forward the second motor diagnostic acknowledgement message to the first control unit 110.

If and only if the first and second motor diagnostic acknowledgement messages agree on each of the one or more electromagnetic characteristics of the electric motor 141 reflected by the first and second motor diagnostic acknowledgement messages respectively, the brake controller 100 is configured to produce a master motor-diagnostic acknowledgement message. Specifically, the master motor-diagnostic acknowledgement message is exclusively produced in one of the first and second control units, for instance 110 as symbolized by ACK in Figure 4.

According to one embodiment of the invention, the brake controller 100 includes first and second force-sensor diagnostic units 241 and 242 respectively, which each is configured to receive a source diagnostic signal FSD from the force sensor 144. The source diagnostic signal FSD indicates a functionality characteristic of the force sensor 144, For example the source diagnostic signal FSD may contain first and second data fields, where the first data field indicates a temperature of at least one component in the electrically operated brake unit 140, and the second data field indicates at least one acceleration parameter reflecting a movement of the electrically operated brake unit 140 in at least one dimension. It is generally beneficial to monitor temperatures because if a component's/ unit's temperature level deviates from the temperature levels of its neighboring components/units, this typically indicates that the component/unit whose temperature deviates is faulty, for example due to mechanical and/or electrical overload. By monitoring the acceleration in at least one dimension, conclusions may be drawn whether the registered acceleration matches an expected acceleration resulting from a latest brake command BC received.

In response to the source diagnostic signal FSD, the first and force-sensor diagnostic unit 241 is configured to produce a first force-sensor diagnostic signal FSD1, and the second motor diagnostic unit 242 is configured to produce a second force-sensor diagnostic signal FSD2.

Here, the first control unit 110 is configured to receive the first force-sensor diagnostic signal FSD1, and in response thereto, produce a first force-sensor diagnostic acknowledgement message reflecting the functionality characteristic of the force sensor 144, for example as a binary parameter indicating whether or not the functionality characteristic lies within an acceptable range. The first control unit 110 is further configured to forward the first force-sensor diagnostic acknowledgement message to the second control unit 120, and receive a second force-sensor diagnostic acknowledgement message from the second control unit 120.

Analogously, the second control unit 120 is configured to receive the second force-sensor diagnostic signal FSD2, and in response thereto, produce the second force-sensor diagnostic acknowledgement message, which reflects the functionality characteristics of the force sensor 144. Further, the second control unit 120 is configured to forward the second force-sensor diagnostic acknowledgement message to the first control unit 110.

The brake control unit 100 is configured to produce a master force-sensor diagnostic acknowledgement message if and only if the first and second force-sensor diagnostic acknowledgement messages agree on the functionality characteristics of the force sensor 144 reflected by the first and second force-sensor diagnostic acknowledgement messages respectively. The master force-sensor diagnostic acknowledgement message is exclusively produced in one of the first and second control units, for example 110 as symbolized in Figure 4 by ACK.

Furthermore, according to one embodiment of the invention shown in Figure 4, the first control unit 110 is configured to produce at least one first status signal CD1, which reflects at least one operation parameter indicating at least one functional status of at least one internal component of the first control unit 110 itself and/or at least one environment parameter indicating at least one milieu aspect concerning the first control unit 110. Analogously, the second control unit 120 is configured to produce at least one second status signal CD2 reflecting at least one operation parameter indicating at least one functional status of at least one internal component of the second control unit 120 and/or at least one environment parameter indicating at least one milieu aspect concerning the second control unit 120. For example, the at least one functional status of the at least one internal component of the first and second control units 110 and 120 may relate to power consumption, input current and/or supply voltage; and the at least one milieu aspect may for example relate to ambient temperature and/ or air humidity.

Here, the brake controller 100 also contains a common diagnostic unit 250, which is configured to receive the first and second status signals CD1 and CD2 respectively, and produce an alarm message A if at least one of the first and second status signals CD1 and CD2 indicates one or more malfunctioning internal components and/or that at least one milieu aspect is outside an acceptable range, for instance that the ambient temperature is too high.

According to yet another embodiment of the invention shown in Figure 4, the brake controller 100 contains first and second voltage modules 210 and 220 respectively.

The first voltage module 210 is arranged to receive a supply voltage V, e.g. 28 V, and in response thereto, provide at least one first output voltage V1, e.g. 1.25 V, 1.5 V, 1.6 V, 1.8 V, 2 V, 3 V, 3.3 V, 3.6 V, 4.5 V, 5 V, 6 V, 9 V, 10 V, 12 V, 13.8 V, 24 V, 27 V and/or 28 V to the first control unit 110, and possibly the gatekeeper unit 130 and/or one or more of the units 231, 231, 241, 242 and/or 250 potentially included in the brake controller 100. The second voltage module 220 is arranged to receive the supply voltage V, e.g. 28 V, and in response thereto, provide at least one second output voltage V2 e.g. 1.25 V, 1.5 V, 1.6 V, 1.8 V, 2 V, 3 V, 3.3 V, 3.6 V, 4.5 V, 5 V, 6 V, 9 V, 10 V, 12 V, 13.8 V, 24 V, 27 V and/or 28 V to the second control unit 120, and possibly the gatekeeper unit 130 and/ or one or more of the units 231, 231, 241, 242 and/or 250 potentially included in the brake controller 100.

Preferably, each of the first and second voltage modules 210 and 220 includes a respective over voltage detector and a respective under voltage detector. Each of the over voltage detectors is configured to monitor the supply voltage V, and if the supply voltage V exceeds a first threshold level; generate an over voltage alarm and disconnect the units connected thereto to protect these units from harmful voltages. Each of the under voltage detectors is also configured to monitor the supply voltage V, and if the supply voltage V falls below a second threshold level; generate an under voltage alarm.

The brake controller 100 is preferably configured to produce the above-described diagnostic acknowledgement messages at regular intervals, say once every 20 ms, via the data bus 105. As explained in this disclosure, no diagnostic acknowledgement message is sent out on the data bus 105 if the underlying diagnostic acknowledgement messages from the first and second control units 110 and 120 disagree. Consequently, should a superior function arranged to monitor the diagnostic acknowledgement messages from the brake controller 100 fail to receive a diagnostic acknowledgement message on the data bus 105 within an expected interval, the superior function is preferably configured to set an alarm indicating a malfunction in the brake controller 100, which malfunction relates to the missing diagnostic acknowledgement message. Thereby, it is possible to identify any faults in the braking system highly accurately and at very short delays.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A brake controller (100) for a rail vehicle, which brake controller (100) is configured to receive a brake command (BC) and in response thereto produce a master control signal (CTRL) controlling an electrically operated brake unit (140) to perform a braking operation, and the brake controller (100) comprising:
a first control unit (110) comprising a processing circuitry (111) arranged to process the brake command (BC) to produce a first control signal (CTRL1) as a result of running a computer program on the processing circuitry (111); and
a second control unit (120) comprising a state machine (121) arranged to take the brake command (BC) as an input state and produce a second control signal (CTRL2) as an output state resulting from said input state being fed into the state machine (121), **characterized in that** the brake controller (100) comprises a gatekeeper unit (130) configured to receive the first and second control signals (CTRL1; CTRL2), and in response thereto produce the master control signal (CTRL) if and only if the first and second control signals (CTRL1; CTRL2) fulfil an identity criterion.

2. The brake controller (100) according to claim 1, wherein each of the first and second control signals (CTRL1; CTRL2) may exclusively attain discrete values, which range from a minimum value to a maximum value, and the gatekeeper unit (130) is configured to consider the identity criterion as fulfilled if and only if the first and second control signals (CTRL1; CTRL2) attain the same discrete value, and if the identity criterion is fulfilled:
produce the master control signal (CTRL) at a value being identical to said same discrete value.

3. The brake controller (100) according to any one of claims 1 or 2, wherein
the master control signal (CTRL) is configured to control an electric motor (141) such that the electric motor (141) mechanically influences at least one friction member (142) to move relative to a rotating member (143) of the electrically operated brake unit (140); and
each of the first and second control units (110; 120) is configured to receive a feedback signal (FB) from the electrically operated brake unit (140), which feedback signal (FB) is produced by a force sensor (144) of the electrically operated brake unit (140).

4. The brake controller (100) according to claim 3, wherein each of the first and second control units (110; 120) is further configured to:
produce a respective first and second acknowledgement message (ACK1, ACK2) in response to the feedback signal (FB), the first and second acknowledgement messages (ACK1, ACK2) confirming that the braking operation has been effected;
exchange the first and second acknowledgement messages (ACK1, ACK2) with one another; and
produce, exclusively in one of the first and second control units (110; 120), a master acknowledgement message (ACK) if and only if the first and second acknowledgement messages (ACK1, ACK2) agree on a magnitude of a force at which the braking operation was effected, which magnitude is indicated by each of the first and second acknowledgement messages (ACK1, ACK2) in first and second data fields respectively.

5. The brake controller (100) according to claim 4, wherein the first and second acknowledgement messages (ACK1, ACK2) are considered to agree on said magnitude if a checksum calculated in one (110) of the first and second control units based on the first data field in one of the first and second acknowledgement messages (ACK1) matches the second data field in the other one of the first and second acknowledgement messages (ACK2), which said other one message was produced in the other one (120) of the first and second control units.

6. The brake controller (100) according to any one of claims 3 to 5, further comprising
a first motor diagnostic unit (231) configured to receive at least one root diagnostic signal (MD) from the electric motor (141), which at least one root diagnostic signal (MD) indicates one or more electromagnetic characteristics of the electric motor (141), and in response to the at least one root diagnostic signal (MD) produce a first motor diagnostic signal (MD1);
a second motor diagnostic unit (232) configured to receive the at least one root diagnostic signal (MD) from the electric motor (141) and in response thereto produce a second motor diagnostic signal (MD2); and
wherein the first control unit (110) is configured to:
receive the first motor diagnostic signal (MD1);
produce a first motor-diagnostic acknowledgement message in response thereto, which first motor-diagnostic acknowledgement message reflects the one or more electromagnetic characteristics of the electric motor (141);
forward the first motor-diagnostic acknowledgement message to the second control unit (120); and
receive a second motor-diagnostic acknowledgement message from the second control unit (120), and
wherein the second control unit (120) is configured to:
receive the second motor diagnostic signal (MD2);
produce the second motor-diagnostic acknowledgement message in response thereto, which second motor-diagnostic acknowledgement message reflects the one or more electromagnetic characteristics of the electric motor (141); and
forward the second motor diagnostic acknowledgement message to the first control unit (110); and
produce, exclusively in one of the first and second control units (110; 120), a master motor-diagnostic acknowledgement message if and only if the first and second motor diagnostic acknowledgement messages agree on the one or more electromagnetic characteristics of the electric motor (141) reflected by the first and second motor diagnostic acknowledgement messages respectively.

7. The brake controller (100) according to any one of claims 3 to 6, further comprising
a first force-sensor diagnostic unit (241) configured to receive a source diagnostic signal (FSD) from the force sensor (144), which source diagnostic signal (FSD) indicates a functionality characteristic of the force sensor (144), and in response to the source diagnostic signal (FSD) produce a first force-sensor diagnostic signal (FSD1);
a second motor diagnostic unit (242) configured to receive the source diagnostic signal (FSD) from the electric motor (141) and in response thereto produce a second force-sensor diagnostic signal (FSD2); and
wherein the first control unit (110) is configured to:
receive the first force-sensor diagnostic signal (FSD1);
produce a first force-sensor diagnostic acknowledgement message in response thereto, which first force-sensor diagnostic acknowledgement message reflects the functionality characteristic of the force sensor (144);
forward the first force-sensor diagnostic acknowledgement message to the second control unit (120); and
receive a second force-sensor diagnostic acknowledgement message from the second control unit (120), and
wherein the second control unit (120) is configured to:
receive the second force-sensor diagnostic signal (FSD2);
produce the second force-sensor diagnostic acknowledgement message in response thereto, which second force-sensor diagnostic acknowledgement message reflects the functionality characteristics of the force sensor (144); and
forward the second force-sensor diagnostic acknowledgement message to the first control unit (110); and
produce, exclusively in one of the first and second control units (110; 120), a master force-sensor diagnostic acknowledgement message if and only if the first and second force-sensor diagnostic acknowledgement messages agree on the functionality characteristics of the force sensor (144) reflected by the first and second force-sensor diagnostic acknowledgement messages respectively.

8. The brake controller (100) according to claim 7, where the source diagnostic signal (FSD) comprises at least one of:
a first data field indicating a temperature of at least one component in the electrically operated brake unit (140), and
a second data field indicating at least one acceleration parameter reflecting a movement of the electrically operated brake unit (140) in at least one dimension.

9. The brake controller (100) according to any one of the preceding claims, wherein:
the first control unit (110) is further configured to produce at least one first status signal (CD1) reflecting at least one of at least one operation parameter indicating at least one functional status of at least one internal component of the first control unit (110) and at least one environment parameter indicating at least one milieu aspect concerning the first control unit (110);
the second control unit (120) is further configured to produce at least one second status signal (CD2) reflecting at least one of at least one operation parameter indicating at least one functional status of at least one internal component of the second control unit (120) and at least one environment parameter indicating at least one milieu aspect concerning the second control unit (120), and
the brake controller (100) comprises a common diagnostic unit (250) configured to:
receive the first and second status signals (CD1; CD2); and
produce an alarm message (A) if at least one of the first and second status signals (CD1; CD2) indicates at least one of:
at least one malfunctioning internal component, and
at least one milieu aspect being outside an acceptable range.

10. The brake controller (100) according to any one of the preceding claims, comprising:
a first voltage module (210) arranged to receive a supply voltage (V) and in response thereto provide at least one first output voltage (V1) to the first control unit (110); and
a second voltage module (220) arranged to receive the supply voltage (V) and in response thereto provide at least one second output voltage (V2) to the second control unit (120);

11. The brake controller (100) according to claim 10, wherein each of the first and second voltage modules (210; 220) comprises:
a respective over voltage detector configured to:
monitor the supply voltage (V), and if the supply voltage (V) exceeds a first threshold level,
generate an over voltage alarm; and
a respective under voltage detector configured to:
monitor the supply voltage (V), and if the supply voltage (V) falls below a second threshold level,
generate an under voltage alarm.

12. The brake controller (100) according to any one of the preceding claims, wherein the state machine (121) is implemented by an integrated circuit.

13. The brake controller (100) according to claim 12, wherein the integrated circuit is a field-programmable gate array, which is designed using a programming language being different from and logically unrelated to a programming language used to generate the computer program running on the processing circuitry (111).

14. The brake controller (100) according to any one of the preceding claims, wherein the gatekeeper unit (130) comprises parallel branches of switches of which parallel branches
a first branch comprises a first switch (131a) controllable to be open or closed in response to the first control signal (CTRL1) and a second switch (132a) controllable to be open or closed in response to the second control signal (CTRL2), and
a second branch comprises a third switch (131b) controllable to be open or closed in response to the first control signal (CTRL1) and a fourth switch (132b) controllable to be open or closed in response to the second control signal (CTRL2),
which first and second branches each is configured to pass through the master control signal (CTRL) if and only if the first and second control signals (CTRL1; CTRL2) fulfil the identity criterion when the first and second switches (131a, 132a) and the third and fourth switches (131b, 132b) respectively are closed.

15. The brake controller (100) according to claim 14, wherein the first, second, third and fourth switches (131a, 132a, 131b, 132b) are implemented in metal-oxide-semiconductor field-effect transistor, MOSFET, technology.

## Patentansprüche

1. Bremssteuergerät (100) für ein Schienenfahrzeug, wobei das Bremssteuergerät (100) dafür konfiguriert ist, einen Bremsbefehl (BC) zu empfangen und in Antwort darauf ein Hauptsteuersignal (CTRL) zu erzeugen, das eine elektrisch betätigte Bremseinheit (140) steuert, um einen Bremsvorgang auszuführen, und wobei das Bremssteuergerät (100) aufweist:
eine erste Steuereinheit (110) mit einer Verarbeitungsschaltung (111), die dazu eingerichtet ist, den Bremsbefehl (BC) zu verarbeiten, um als Ergebnis der Ausführung eines Computerprogramms auf der Verarbeitungsschaltung (111) ein erstes Steuersignal (CTRL1) zu erzeugen; und
eine zweite Steuereinheit (120) mit einer Zustandsmaschine (121), die dazu eingerichtet ist, den Bremsbefehl (BC) als einen Eingangsstatus zu nehmen und ein zweites Steuersignal (CTRL2) als einen Ausgangsstatus zu erzeugen, der sich aus dem der Zustandsmaschine (121) zugeführten Eingangsstatus ergibt,
**dadurch gekennzeichnet, dass**
das Bremssteuergerät (100) eine Gatekeeper-Einheit (130) aufweist, die dafür konfiguriert ist, das erste und das zweite Steuersignal (CTRL1; CTRL2) zu empfangen und in Antwort darauf das Hauptsteuersignal (CTRL) zu erzeugen, dann und nur dann, wenn das erste und das zweite Steuersignal (CTRL1; CTRL2) ein Identitätskriterium erfüllen.

2. Bremssteuergerät (100) nach Anspruch 1, wobei jedes unter dem ersten und dem zweiten Steuersignal (CTRL1; CTRL2) ausschließlich diskrete Werte annehmen kann, die von einem Minimalwert bis zu einem Maximalwert reichen, und wobei die Gatekeeper-Einheit (130) dafür konfiguriert ist, das Identitätskriterium als erfüllt zu betrachten, dann und nur dann, wenn das erste und das zweite Steuersignal (CTRL1; CTRL2) den gleichen diskreten Wert annehmen, und wenn das Identitätskriterium erfüllt ist, das Hauptsteuersignal (CTRL) mit einem Wert zu erzeugen, der dem gleichen diskreten Wert gleicht.

3. Bremssteuergerät (100) nach Anspruch 1 oder 2, wobei
das Hauptsteuersignal (CTRL) dafür konfiguriert ist, einen Elektromotor (141) derart zu steuern, dass der Elektromotor (141) mindestens ein Reibungselement (142) mechanisch beeinflusst, so dass es sich relativ zu einem Drehelement (143) der elektrisch betätigten Bremseinheit (140) bewegt, und
jede unter der ersten und der zweiten Steuereinheit (110; 120) dafür konfiguriert ist, ein Rückkopplungssignal (FB) von der elektrisch betätigten Bremseinheit (140) zu empfangen, wobei das Rückkopplungssignal (FB) durch einen Kraftsensor (144) der elektrisch betätigten Bremseinheit (140) erzeugt wird.

4. Bremssteuergerät (100) nach Anspruch 3, wobei jede unter der ersten und der zweiten Steuereinheit (110; 120) ferner dafür konfiguriert ist:
in Antwort auf das Rückkopplungssignal (FB) eine jeweilige erste und zweite Bestätigungsnachricht (ACK1, ACK2) zu erzeugen, wobei die erste und die zweite Bestätigungsnachricht (ACK1, ACK2) bestätigen, dass der Bremsvorgang ausgeführt worden ist;
die erste und die zweite Bestätigungsnachricht (ACK1, ACK2) miteinander auszutauschen; und
ausschließlich in einer unter der ersten und der zweiten Steuereinheit (110; 120) eine Master-Bestätigungsnachricht (ACK) zu erzeugen, dann und nur dann, wenn die erste und die zweite Bestätigungsnachricht (ACK1, ACK2) hinsichtlich der Größe einer Kraft übereinstimmen, mit der der Bremsvorgang ausgeführt wurde, wobei diese Größe durch die erste bzw. die zweite Bestätigungsnachricht (ACK1, ACK2) in einem ersten bzw. einem zweiten Datenfeld angezeigt wird.

5. Bremssteuergerät (100) nach Anspruch 4, wobei die erste und die zweite Bestätigungsnachricht (ACK1, ACK2) als übereinstimmend in Bezug auf die genannte Größe angesehen werden, wenn eine Prüfsumme, die in einer (110) unter der ersten und der zweiten Steuereinheit basierend auf dem ersten Datenfeld in einer unter der ersten und der zweiten Bestätigungsnachricht (ACK1) berechnet wurde, mit dem zweiten Datenfeld in der anderen unter der ersten und der zweiten Bestätigungsnachricht (ACK2) übereinstimmt, wobei die andere Nachricht in der anderen (120) unter der ersten und der zweiten Steuereinheit erzeugt wurde.

6. Bremssteuergerät (100) nach einem der Ansprüche 3 bis 5, ferner aufweisend
eine erste Motordiagnoseeinheit (231), die dafür konfiguriert ist, mindestens ein Root-Diagnosesignal (MD) vom Elektromotor (141) zu empfangen, wobei das mindestens eine Root-Diagnosesignal (MD) eine oder mehrere elektromagnetische Eigenschaften des Elektromotors (141) anzeigt, und in Antwort auf das mindestens eine Root-Diagnosesignal (MD) ein erstes Motordiagnosesignal (MD1) zu erzeugen;
eine zweite Motordiagnoseeinheit (232), die dafür konfiguriert ist, das mindestens eine Root-Diagnosesignal (MD) vom Elektromotor (141) zu empfangen und in Antwort darauf ein zweites Motordiagnosesignal (MD2) zu erzeugen, und
wobei die erste Steuereinheit (110) dafür konfiguriert ist:
das erste Motordiagnosesignal (MD1) zu empfangen;
in Antwort darauf eine erste Motordiagnosebestätigungsnachricht zu erzeugen, wobei die erste Motordiagnosebestätigungsnachricht die eine oder die mehreren elektromagnetischen Eigenschaften des Elektromotors (141) widerspiegelt;
die erste Motordiagnosebestätigungsnachricht an die zweite Steuereinheit (120) weiterzuleiten; und
eine zweite Motordiagnosebestätigungsnachricht von der zweiten Steuereinheit (120) zu empfangen, und
wobei die zweite Steuereinheit (120) dafür konfiguriert ist:
das zweite Motordiagnosesignal (MD2) zu empfangen;
in Antwort darauf die zweite Motordiagnosebestätigungsnachricht zu erzeugen, wobei die zweite Motordiagnosebestätigungsnachricht die eine oder die mehreren elektromagnetischen Eigenschaften des Elektromotors (141) widerspiegelt; und
die zweite Motordiagnosebestätigungsnachricht an die erste Steuereinheit (110) weiterzuleiten; und
ausschließlich in einer unter der ersten und der zweiten Steuereinheit (110; 120) eine Master-Motordiagnosebestätigungsnachricht zu erzeugen, dann und nur dann, wenn die erste und die zweite Motordiagnosebestätigungsnachricht bezüglich der einen oder mehreren elektromagnetischen Eigenschaften des Elektromotors (141), die durch die entsprechende erste und zweite Motordiagnosebestätigungsnachricht widergespiegelt werden, übereinstimmen.

7. Bremssteuergerät (100) nach einem der Ansprüche 3 bis 6, ferner aufweisend:
eine erste Kraftsensordiagnoseeinheit (241), die dafür konfiguriert ist, ein Quelldiagnosesignal (FSD) vom Kraftsensor (144) zu empfangen, wobei das Quelldiagnosesignal (FSD) ein Funktionsmerkmal des Kraftsensors (144) anzeigt, und in Antwort auf das Quelldiagnosesignal (FSD) ein erstes Kraftsensordiagnosesignal (FSD1) zu erzeugen;
eine zweite Motordiagnoseeinheit (242), die dafür konfiguriert ist, das Quelldiagnosesignal (FSD) vom Elektromotor (141) zu empfangen und in Antwort darauf ein zweites Kraftsensordiagnosesignal (FSD2) zu erzeugen; und
wobei die erste Steuereinheit (110) dafür konfiguriert ist:
das erste Kraftsensordiagnosesignal (FSD1) zu empfangen;
in Antwort darauf eine erste Kraftsensordiagnosebestätigungsnachricht zu erzeugen, wobei die erste Kraftsensordiagnosebestätigungsnachricht das Funktionsmerkmal des Kraftsensors (144) widerspiegelt;
die erste Kraftsensordiagnosebestätigungsnachricht an die zweite Steuereinheit (120) weiterzuleiten; und
eine zweite Kraftsensordiagnosebestätigungsnachricht von der zweiten Steuereinheit (120) zu empfangen, und
wobei die zweite Steuereinheit (120) dafür konfiguriert ist:
das zweite Kraftsensordiagnosesignal (FSD2) zu empfangen;
in Antwort darauf die zweite Kraftsensordiagnosebestätigungsnachricht zu erzeugen, wobei die zweite Kraftsensordiagnosebestätigungsnachricht ein Funktionsmerkmal des Kraftsensors (144) widerspiegelt; und
die zweite Kraftsensordiagnosebestätigungsnachricht an die erste Steuereinheit (110) weiterzuleiten; und
ausschließlich in einer unter der ersten und der zweiten Steuereinheit (110; 120) eine Master-Kraftsensordiagnosebestätigungsnachricht zu erzeugen, dann und nur dann, wenn die erste und die zweite Kraftsensordiagnosebestätigungsnachricht bezüglich der Funktionsmerkmale des Kraftsensors (144), die durch die entsprechende erste und die zweite Kraftsensordiagnosebestätigungsnachricht widergespiegelt werden, übereinstimmen.

8. Bremssteuergerät (100) nach Anspruch 7, wobei das Quelldiagnosesignal (FSD) mindestens eines der folgenden Elemente aufweist:
ein erstes Datenfeld, das eine Temperatur mindestens einer Komponente in der elektrisch betätigten Bremseinheit (140) anzeigt; und
ein zweites Datenfeld, das mindestens einen Beschleunigungsparameter anzeigt, der eine Bewegung der elektrisch betätigten Bremseinheit (140) in mindestens einer Dimension widerspiegelt.

9. Bremssteuergerät (100) nach einem der vorangehenden Ansprüche, wobei:
die erste Steuereinheit (110) ferner dafür konfiguriert ist, mindestens ein erstes Statussignal (CD1) zu erzeugen, das mindestens einen Betriebsparameter, der mindestens einen Funktionsstatus mindestens einer internen Komponente der ersten Steuereinheit (110) anzeigt, und mindestens einen Umgebungsparameter widerspiegelt, der mindestens einen Umgebungsaspekt in Bezug auf die erste Steuereinheit (110) anzeigt,
die zweite Steuereinheit (120) ferner dafür konfiguriert ist, mindestens ein zweites Statussignal (CD2) zu erzeugen, das mindestens einen Betriebsparameter, der mindestens einen Funktionsstatus mindestens einer internen Komponente der zweiten Steuereinheit (120) anzeigt, und mindestens einen Umgebungsparameter widerspiegelt, der mindestens einen Umgebungsaspekt in Bezug auf die zweite Steuereinheit (120) anzeigt, und
das Bremssteuergerät (100) eine gemeinsame Diagnoseeinheit (250) aufweist, die dafür konfiguriert ist:
das erste und das zweite Statussignal (CD1; CD2) zu empfangen; und
eine Alarmmeldung (A) zu erzeugen, wenn mindestens eines unter dem ersten und dem zweiten Statussignal (CD1; CD2) mindestens eines der folgenden Informationen anzeigt:
mindestens eine fehlerhafte interne Komponente; und
dass mindestens ein Umgebungsaspekt außerhalb eines akzeptablen Bereichs liegt.

10. Bremssteuergerät (100) nach einem der vorangehenden Ansprüche, aufweisend:
ein erstes Spannungsmodul (210), das dazu eingerichtet ist, eine Versorgungsspannung (V) zu empfangen und in Antwort darauf der ersten Steuereinheit (110) mindestens eine erste Ausgangsspannung (V1) zuzuführen; und
ein zweites Spannungsmodul (220), das dazu eingerichtet ist, die Versorgungsspannung (V) zu empfangen und in Antwort darauf der zweiten Steuereinheit (120) mindestens eine zweite Ausgangsspannung (V2) zuzuführen.

11. Bremssteuergerät (100) nach Anspruch 10, wobei jedes unter dem ersten und dem zweiten Spannungsmodul (210; 220) aufweist:
einen jeweiligen Überspannungsdetektor, der dafür konfiguriert ist:
die Versorgungsspannung (V) zu überwachen und, wenn die Versorgungsspannung (V) einen ersten Schwellenwert überschreitet,
einen Überspannungsalarm zu erzeugen; und
einen jeweiligen Unterspannungsdetektor, der dafür konfiguriert ist:
die Versorgungsspannung (V) zu überwachen und, wenn die Versorgungsspannung (V) unter einen zweiten Schwellenwert fällt, einen Unterspannungsalarm zu erzeugen.

12. Bremssteuergerät (100) nach einem der vorangehenden Ansprüche, wobei die Zustandsmaschine (121) durch eine integrierte Schaltung implementiert ist.

13. Bremssteuergerät (100) nach Anspruch 12, wobei die integrierte Schaltung ein feldprogrammierbares Gate-Array ist, das unter Verwendung einer Programmiersprache konstruiert ist, die sich von einer Programmiersprache unterscheidet und logisch nicht mit dieser verwandt ist, die zum Erzeugen des auf der Verarbeitungsschaltung (111) laufenden Computerprogramms verwendet wird.

14. Bremssteuergerät (100) nach einem der vorangehenden Ansprüche, wobei
die Gatekeeper-Einheit (130) parallele Zweige von Schaltern aufweist, wobei unter den parallelen Zweigen:
ein erster Zweig einen ersten Schalter (131a) aufweist, der in Antwort auf das erste Steuersignal (CTRL1) auf einen offenen oder einen geschlossenen Zustand steuerbar ist, und einen zweiten Schalter (132a), der in Antwort auf das zweite Steuersignal (CTRL2) auf einen offenen oder einen geschlossenen Zustand steuerbar ist, und
ein zweiter Zweig einen dritten Schalter (131b) aufweist, der in Antwort auf das erste Steuersignal (CTRL1) auf einen offenen oder einen geschlossenen Zustand steuerbar ist, und einen vierten Schalter (132b), der in Antwort auf das zweite Steuersignal (CTRL2) auf einen offenen oder einen geschlossenen Zustand steuerbar ist,
wobei der erste und der zweite Zweig jeweils derart konfiguriert sind, dass sie das Hauptsteuersignal (CTRL) dann und nur dann durchlassen, wenn das erste und das zweite Steuersignal (CTRL1; CTRL2) das Identitätskriterium erfüllen, wenn der erste und der zweite Schalter (131a, 132a) und der dritte und der vierte Schalter (131b, 132b) jeweils geschlossen sind.

15. Bremssteuergerät (100) nach Anspruch 14, wobei der erste, der zweite, der dritte und der vierte Schalter (131a, 132a, 131b, 132b) in Metall-Oxid-Halbleiter-Feldeffekttransistor- (MOSFET) Technologie implementiert sind.

## Revendications

1. Dispositif de commande de frein (100) pour un véhicule ferroviaire, lequel dispositif de commande de frein (100) est configuré pour recevoir une commande de frein (BC) et en réponse à celle-ci produire un signal de commande maître (CTRL) commandant une unité de freinage (140) à commande électrique pour réaliser une opération de freinage, et le dispositif de commande de frein (100) comportant :
une première unité de commande (110) comportant une circuiterie de traitement (111) agencée pour traiter la commande de freinage (BC) pour produire un premier signal de commande (CTRL1) à la suite de l'exécution d'un programme informatique sur la circuiterie de traitement (111) ; et
une seconde unité de commande (120) comportant une machine d'état (121) agencée pour prendre la commande de freinage (BC) comme état d'entrée et produire un second signal de commande (CTRL2) comme état de sortie résultant dudit état d'entrée étant alimenté dans la machine d'état (121), **caractérisé en ce que** le dispositif de commande de frein (100) comporte une unité gatekeeper (130) configurée pour recevoir les premier et second signaux de commande (CTRL1 ; CTRL2) et, en réponse à cela, produire le signal de commande maître (CTRL) si et seulement si les premier et second signaux de commande (CTRL1 ; CTRL2) remplissent un critère d'identité.

2. Dispositif de commande de frein (100) selon la revendication 1, dans lequel chacun des premier et second signaux de commande (CTRL1 ; CTRL2) peut atteindre exclusivement des valeurs discrètes, qui vont d'une valeur minimale à une valeur maximale, et l'unité gatekeeper (130) est configurée pour considérer le critère d'identité comme rempli si et seulement si les premier et second signaux de commande (CTRL1 ; CTRL2) atteignent la même valeur discrète, et si le critère d'identité est rempli :
produire le signal de commande maître (CTRL) à une valeur identique à ladite même valeur discrète.

3. Dispositif de commande de frein (100) selon l'une quelconque des revendications 1 et 2, dans lequel
le signal de commande maître (CTRL) est configuré pour commander un moteur électrique (141) de sorte que le moteur électrique (141) influence mécaniquement au moins un organe de friction (142) pour se déplacer par rapport à un organe rotatif (143) de l'unité de freinage à commande électrique (140) ; et
chacune des première et seconde unités de commande (110 ; 120) est configurée pour recevoir un signal de rétroaction (FB) de l'unité de frein à commande électrique (140), lequel signal de rétroaction (FB) est produit par un capteur de force (144) de l'unité de frein à commande électrique (140).

4. Dispositif de commande de frein (100) selon la revendication 3, dans lequel chacune des première et seconde unités de commande (110 ; 120) est en outre configurée pour :
produire un premier et un second messages d'acquittement (ACK1, ACK2) respectifs en réponse au signal de rétroaction (FB), les premier et second messages d'acquittement (ACK1, ACK2) confirmant que l'opération de freinage a été réalisée ;
échanger les premier et second messages d'acquittement (ACK1, ACK2) entre eux ; et
produire, exclusivement dans l'une des première et seconde unités de commande (110 ; 120), un message d'acquittement maître (ACK) si et seulement si les premier et second messages d'acquittement (ACK1, ACK2) concordent sur une grandeur d'une force à laquelle l'opération de freinage a été réalisée, laquelle grandeur étant indiquée par chacun des premier et second messages d'acquittement (ACK1, ACK2) respectivement dans des premier et second champs de données.

5. Dispositif de commande de frein (100) selon la revendication 4, dans lequel les premier et second messages d'acquittement (ACK1, ACK2) sont considérés comme concordant sur ladite grandeur si une somme de contrôle calculée dans l'une (110) des première et seconde unités de commande sur la base du premier champ de données dans l'un des premier et second messages d'acquittement (ACK1) correspond au second champ de données dans l'autre des premier et second messages d'acquittement (ACK2), ledit autre message ayant été produit dans l'autre (120) des première et seconde unités de commande.

6. Dispositif de commande de frein (100) selon l'une quelconque des revendications 3 à 5, comportant en outre :
une première unité de diagnostic de moteur (231) configurée pour recevoir au moins un signal de diagnostic racine (MD) depuis le moteur électrique (141), lequel au moins un signal de diagnostic racine (MD) indiquant une ou plusieurs caractéristiques électromagnétiques du moteur électrique (141) et, en réponse à l'au moins un signal de diagnostic racine (MD), produire un premier signal de diagnostic de moteur (MD1) ;
une seconde unité de diagnostic de moteur (232) configurée pour recevoir l'au moins un signal de diagnostic racine (MD) depuis le moteur électrique (141) et, en réponse à celui-ci, produire un second signal de diagnostic de moteur (MD2) ; et
dans lequel la première unité de commande (110) est configurée pour :
recevoir le premier signal de diagnostic de moteur (MD1) ;
produire un premier message d'acquittement de diagnostic de moteur en réponse à celui-ci, lequel premier message d'acquittement de diagnostic de moteur reflétant les une ou plusieurs caractéristiques électromagnétiques du moteur électrique (141) ;
transmettre le premier message d'acquittement de diagnostic de moteur à la seconde unité de commande (120) ; et
recevoir un second message d'acquittement de diagnostic de moteur depuis la seconde unité de commande (120), et
dans lequel la seconde unité de commande (120) est configurée pour :
recevoir le second signal de diagnostic de moteur (MD2) ;
produire le second message d'acquittement de diagnostic de moteur en réponse à celui-ci, lequel second message d'acquittement de diagnostic de moteur reflétant les une ou plusieurs caractéristiques électromagnétiques du moteur électrique (141) ; et
transmettre le second message d'acquittement de diagnostic de moteur à la première unité de commande (110) ; et
produire, exclusivement dans l'une des première et seconde unités de commande (110 ; 120), un message d'acquittement de diagnostic de moteur maître si et seulement si les premier et second messages d'acquittement de diagnostic de moteur concordent sur les une ou plusieurs caractéristiques électromagnétiques du moteur électrique (141) reflétées respectivement par les premier et second messages d'acquittement de diagnostic de moteur.

7. Dispositif de commande de frein (100) selon l'une quelconque des revendications 3 à 6, comportant en outre
une première unité de diagnostic de capteur de force (241) configurée pour recevoir un signal de diagnostic de source (FSD) depuis le capteur de force (144), lequel signal de diagnostic de source (FSD) indiquant une caractéristique de fonctionnalité du capteur de force (144) et, en réponse au signal de diagnostic de source (FSD), produire un premier signal de diagnostic de capteur de force (FSD1) ;
une seconde unité de diagnostic de moteur (242) configurée pour recevoir le signal de diagnostic de source (FSD) depuis le moteur électrique (141) et, en réponse à celui-ci, produire un second signal de diagnostic de capteur de force (FSD2) ; et
dans lequel la première unité de commande (110) est configurée pour :
recevoir le premier signal de diagnostic de capteur de force (FSD1) ;
produire un premier message d'acquittement de diagnostic de capteur de force en réponse à celui-ci, lequel premier message d'acquittement de diagnostic de capteur de force reflétant la caractéristique de fonctionnalité du capteur de force (144) ;
transmettre le premier message d'acquittement de diagnostic de capteur de force à la seconde unité de commande (120) ; et
recevoir un second message d'acquittement de diagnostic de capteur de force depuis la seconde unité de commande (120), et
dans lequel la seconde unité de commande (120) est configurée pour :
recevoir le second signal de diagnostic de capteur de force (FSD2) ;
produire le second message d'acquittement de diagnostic de capteur de force en réponse à celui-ci, lequel second message d'acquittement de diagnostic de capteur de force reflétant les caractéristiques de fonctionnalité du capteur de force (144) ; et
transmettre le second message d'acquittement de diagnostic de capteur de force à la première unité de commande (110) ; et
produire, exclusivement dans l'une des première et seconde unités de commande (110 ; 120), un message d'acquittement de diagnostic de capteur de force maître si et seulement si les premier et second messages d'acquittement de diagnostic de capteur de force concordent sur les caractéristiques de fonctionnalité du capteur de force (144) reflétées respectivement par les premier et second messages d'acquittement de diagnostic de capteur de force.

8. Dispositif de commande de frein (100) selon la revendication 7, dans lequel le signal de diagnostic source (FSD) comporte au moins l'un parmi :
un premier champ de données indiquant une température d'au moins un composant dans l'unité de freinage à commande électrique (140), et
un second champ de données indiquant au moins un paramètre d'accélération reflétant un mouvement de l'unité de freinage à commande électrique (140) dans au moins une dimension.

9. Dispositif de commande de frein (100) selon l'une quelconque des revendications précédentes, dans lequel :
la première unité de commande (110) est en outre configurée pour produire au moins un premier signal d'état (CD1) reflétant au moins un parmi au moins un paramètre de fonctionnement indiquant au moins un état fonctionnel d'au moins un composant interne de la première unité de commande (110) et au moins un paramètre d'environnement indiquant au moins un aspect de milieu concernant la première unité de commande (110) ;
la seconde unité de commande (120) est en outre configurée pour produire au moins un second signal d'état (CD2) reflétant au moins un parmi au moins un paramètre de fonctionnement indiquant au moins un état fonctionnel d'au moins un composant interne de la seconde unité de commande (120) et au moins un paramètre d'environnement indiquant au moins un aspect de milieu concernant la seconde unité de commande (120), et
le dispositif de commande de frein (100) comporte une unité de diagnostic commune (250) configurée pour :
recevoir les premier et second signaux d'état (CD1 ; CD2) ; et
produire un message d'alarme (A) si au moins l'un des premier et second signaux d'état (CD1 ; CD2) indique au moins l'un parmi :
au moins un composant interne défectueux, et
au moins un aspect de milieu étant en dehors d'une plage acceptable.

10. Dispositif de commande de frein (100) selon l'une quelconque des revendications précédentes, comportant :
un premier module de tension (210) agencé pour recevoir une tension d'alimentation (V) et, en réponse à celle-ci, fournir au moins une première tension de sortie (V1) à la première unité de commande (110) ; et
un second module de tension (220) agencé pour recevoir la tension d'alimentation (V) et, en réponse à celle-ci, fournir au moins une seconde tension de sortie (V2) à la seconde unité de commande (120) ;

11. Dispositif de commande de frein (100) selon la revendication 10, dans lequel chacun des premier et second modules de tension (210 ; 220) comporte :
un détecteur de surtension respectif configuré pour :
surveiller la tension d'alimentation (V) et, si la tension d'alimentation (V) dépasse un premier niveau seuil,
générer une alarme de surtension ; et
un détecteur de sous-tension respectif configuré pour :
surveiller la tension d'alimentation (V) et, si la tension d'alimentation (V) descend en dessous d'un deuxième niveau seuil,
générer une alarme de sous-tension.

12. Dispositif de commande de frein (100) selon l'une quelconque des revendications précédentes, dans lequel la machine d'état (121) est mise en œuvre par un circuit intégré.

13. Dispositif de commande de frein (100) selon la revendication 12, dans lequel le circuit intégré est une matrice prédiffusée programmable par l'utilisateur qui est conçue à l'aide d'un langage de programmation différent et logiquement indépendant d'un langage de programmation utilisé pour générer le programme informatique fonctionnant sur la circuiterie de traitement (111).

14. Dispositif de commande de frein (100) selon l'une quelconque des revendications précédentes, dans lequel l'unité gatekeeper (130) comporte des branches parallèles de commutateurs parmi lesquelles
une première branche comporte un premier commutateur (131a) pouvant être commandé pour être ouvert ou fermé en réponse au premier signal de commande (CTRL1) et un deuxième commutateur (132a) pouvant être commandé pour être ouvert ou fermé en réponse au second signal de commande (CTRL2), et
une second branche comporte un troisième commutateur (131b) pouvant être commandé pour être ouvert ou fermé en réponse au premier signal de commande (CTRL1) et un quatrième commutateur (132b) pouvant être commandé pour être ouvert ou fermé en réponse au second signal de commande (CTRL2),
chacune des première et seconde branches étant configurée pour faire passer le signal de commande maître (CTRL) si et seulement si les premier et second signaux de commande (CTRL1 ; CTRL2) remplissent le critère d'identité lorsque les premier et deuxième commutateurs (131a, 132a) et les troisième et quatrième commutateurs (131b, 132b) sont respectivement fermés.

15. Dispositif de commande de frein (100) selon la revendication 14, dans lequel les premier, deuxième, troisième et quatrième commutateurs (131a, 132a, 131b, 132b) sont mis en œuvre avec une technologie de transistor à effet de champ à semi-conducteur à oxyde métallique, MOSFET.
